# EUROPÄISCHE PATENTSCHRIFT

(11) **EP 0 990 090 B1**
(45) Veröffentlichungstag und Bekanntmachung des Hinweises auf die Patenterteilung: **05.11.2003**
(21) Anmeldenummer: 99916878.4
(22) Anmeldetag: 23.03.1999
(51) Int. Cl.: F01D 5/14, F04D 29/32

(54) **ROTOR-SCHAUFELBLATT EINER AXIALSTRÖMUNGSMASCHINE**
ROTOR BLADE OF AN AXIAL-FLOW ENGINE
PALE DE ROTOR D'UN MOTEUR A ECOULEMENT AXIAL

(30) Priorität: 23.03.1998 DE 19812624
(43) Veröffentlichungstag der Anmeldung: 05.04.2000
(73) Patentinhaber: Rolls-Royce Deutschland Ltd & Co KG, 15827 Dahlewitz (DE)
(72) Erfinder: SCHLECHTRIEM, Stefan, CH-5522 Tägering (CH)
(74) Vertreter: Wablat, Wolfgang, Dr. Dr.
(86) Internationale Anmeldenummer: EP9901981
(87) Internationale Veröffentlichungsnummer: WO99049185

(56) Entgegenhaltungen:
- EP-A- 0 774 567
- US-A- 3 989 406
- US-A- 4 012 172
- NEUBERT R J ET AL: "APPLICATION OF SWEEP TO IMPROVE THE EFFICIENCY OF A TRANSONIC FAN PART I: DESIGN" JOURNAL OF PROPULSION AND POWER, Bd. 11, Nr. 1, 1. Januar 1995 (1995-01-01), Seiten 49-54, XP000485913 ISSN: 0748-4658

## Beschreibung

Die Erfindung betrifft ein Rotor-Schaufelblatt einer Axialströmungsmaschine, insbesondere für einen Fan oder eine Verdichter-Hochdruckstufe einer Gasturbinenanlage, mit Maßnahmen im Spitzenbereich zur Verbesserung des Überschallverhaltens. Zum technischen Umfeld wird neben der US 3,989,406 auf die US 4,012,172 verwiesen. Die erstgenannte Schrift befasst sich dabei mit dem Überschallverhalten von Rotor-Schaufelblättern allgemein und die zweitgenannte Schrift zeigt ein Schaufelblatt mit sog. Vorwärtspfeilung, d.h. ein Schaufelblatt, bei welchem die Anströmkante ausgehend vom Schaufelfuß zunächst entgegen der Strömungsrichtung gewölbt verläuft, so daß in einer Seitenansicht die Blattfläche bzw. Tiefe des Schaufelblattes zunächst kontinuerlich zunimmmt, um nach Erreichen eines Umkehrpunktes zum Blatt-Spitzenbereich hin in Strömungsrichtung gewölbt zu verlaufen, wobei in dieser besagten Seitenansicht die Blattfläche bzw. Tiefe des Schaufelblattes wieder abnimmt.

Die vorliegende Erfindung bezieht sich ebenfalls auf die Pfeilung von Rotorblättern, insbesondere der ersten Verdichterhochdruckstufen oder des Fans von Gasturbinen, bspw. Fluggasturbinen. Aufgrund der hohen Umfangsgeschwindigkeiten der genannten Komponenten und der nahezu drallfreien Anströmung derselben entstehen Überschallgebiete im Blattspitzenbereich mit Machzahlen größer als 1,4. Diese haben in mehrerer Hinsicht negative Auswirkungen auf die Leistung dieser Komponente. So sinkt nämlich der Wirkungsgrad mit steigender Schaufelhöhe wegen der ansteigenden Stoßverluste wesentlich stärker als bei subsonischen Laufrädern. Ferner wird durch die Wechselwirkung von Kanalstoß und Blattspitzenwirbel die Stabilität der Strömung negativ beeinflußt, da dort große Blockagegebiete entstehen, deren nichtlineares Anwachsen letztendlich die Stabilitätsgrenze des Verdichters festlegt.

Siehe auch das Dokument EP-A-0 774 567.

Eine Abhilfemaßnahme für diese geschilderte Problematik aufzuzeigen, ist Aufgabe der vorliegenden Erfindung.
Die Lösung dieser Aufgabe ist gekennzeichnet durch eine Vorwärts-Rückwärts-Pfeilung der Schaufelanströmkante. Vorteilhafte Aus- und Weiterbildungen sind Inhalt der Unteransprüche.

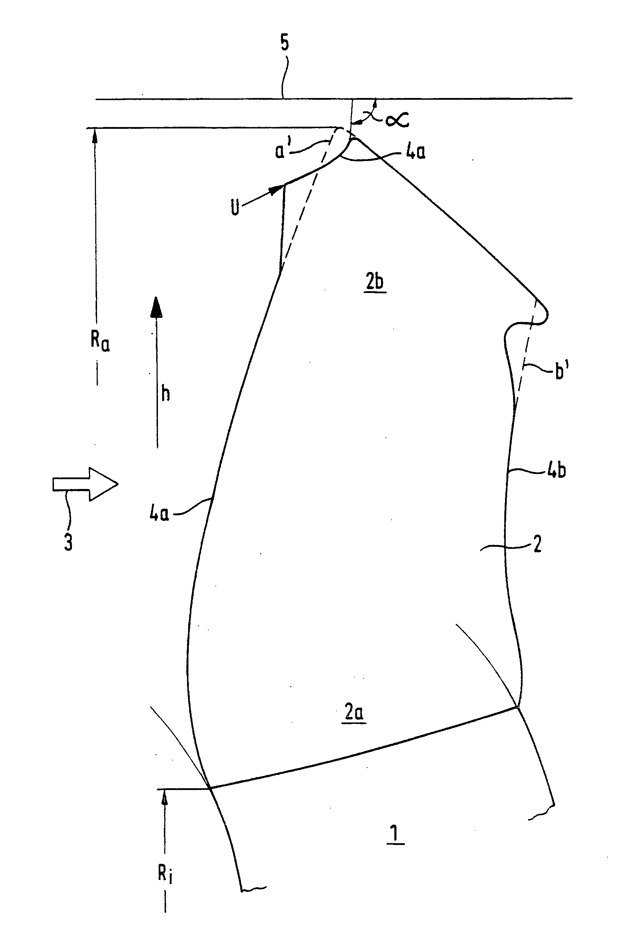

Näher erläutert wird die Erfindung anhand eines bevorzugten Ausführungsbeispieles, wobei in der beigefügten einzigen Figur die Seitenansicht eines Rotor-Schaufelblattes stark vereinfacht dargestellt ist.

Mit der Bezugsziffer 1 ist der Schaufelfuß und mit der Bezugsziffer 2 das Schaufelblatt einer Rotorschaufel einer Axialströmungsmaschine, insbesondere für einen Fan oder eine Verdichter-Hochdruckstufe einer Gasturbinenanlage bezeichnet. Dieses Schaufelblatt 2 wird gemäß Pfeilrichtung 3 (= Strömungsrichtung 3) von einer Luftströmung angeströmt, d.h. die linksseitige Vorderkante des Schaufelblattes 2 ist dessen Anströmkante 4a und die rechtsseitige Hinterkante ist die Abströmkante 4b. Die nicht dargestellte Rotationsachse des Rotors verläuft somit parallel zur Strömungsrichtung 3 und befindet sich (weit) unterhalb des Schaufelfußes 1.

Das Schaufelblatt 2 besitzt wie üblich einen sog Fußbereich 2a sowie einen Spitzenbereich 2b, wobei sich letzterer im wesentlichen über die äußeren 15% bis 25%, insbesondere über ca. 20% der Schaufelblatthöhe h erstreckt. Letztere ist betragsmäßig die Differenz (Rₐ - Rᵢ), wobei Rₐ der von der Rotationsachse aus gemessene Außenradius und Rᵢ der Innenradius des Schaufelblattes 2 ist. Im Spitzenbereich 2b ist nun sowohl die Anströmkante 4a als auch die Abströmkante 4b für ein konventionell gestaltetes Schaufelblatt 2 dargestellt, und zwar durch gestrichelte Linien a', b'. An einem derartig konventionell geformten Schaufelblatt sind aber die eingangs genannten Nachteile feststellbar.

Als Abhilfemaßnahme besitzt das erfindungsgemäße Schaufelblatt 2 im Spitzenbereich 2b zumindest an der Schaufelanströmkante 4a wie ersichtlich eine Vorwärts-Rückwärts-Pfeilung, d.h. in diesem Spitzenbereich 2b verläuft die Schaufelanströmkante 4a gegenüber der konventionellen Gestaltung zunächst entgegen der Strömungsrichtung 3, um nach Erreichen eines Umkehrpunktes U in Strömungsrichtung 3 eingezogen zu verlaufen, und zwar weiter eingezogen als bei konventionell gestalteter Schaufelanströmkante a'. Im obersten Bereich, d.h. an der Schaufelspitze wird dabei aus mechanischen Gründen zwischen der Anströmkante 4a und der durch die Linie 5 dargestellten Gehäusekontur des den Rotor umgebenden nicht gezeigten Gehäuses ein Winkel α in der Größenordnung von 90° angestrebt.

Die Schaufelabströmkante 4b ist im Spitzenbereich 2b im wesentlichen ähnlich der Schaufelanströmkante 4a gestaltet, d.h. auch hier findet sich eine Vorwärts-Rückwärts-Pfeilung, wie der Vergleich der durchgezogenen Linie (4b) mit der die konventionelle Gestaltung wiedergebenden Linie b' zeigt.

Generell kann dabei die Rückwärtspfeilung intensiver ausgebildet sein als die Vorwärtspfeilung, um der Machzahlverteilung Rechnung zu tragen. Dies bedeutet, daß die in der Figurendarstellung nicht näher bezeichnete Strecke, um welche die Schaufelanströmkante 4a im Spitzenbereich gegenüber der konventionellen Gestaltung gemäß der Linie a' zurückgezogen ist, größer ist als diejenige (ebenfalls nicht näher bezeichnete) Strecke, um welche die Schaufelanströmkante 4a im Bereich des Umkehrpunktes U gegenüber der konventionellen Gestaltung gemäß der Linie a' nach vorne gezogen ist. Daß dies in der zeichnerischen Darstellung andersartig erscheint, hat seine Ursache in der zweidimensionalen Darstellung, wohingegen es sich bei einem Rotor-Schaufelblatt wie bekannt um ein dreidimensionales Gebilde handelt.

Die Pfeilung kann auch derart ausgeführt werden, daß der oberste Profilabschnitt eines konventionellen Rotor-Schaufelblattes beibehalten werden kann. Dies ermöglicht dann einen Austausch der Beschaufelung in einem bereits bestehenden Gehäuse einer Axialströmungsmaschine, auch in einem solchen mit Wandkonturierung, ohne Anstreifringe anpassen zu müssen.

Die vorgeschlagene Vorwärts-Rüchwärts-Pfeilung bewirkt in erster Linie eine Reduzierung der lokalen Anströmmachzahl und damit eine Reduzierung der Stoßverluste. Dabei werden wegen der Vorwärts-Rückwärts-Pfeilung keine größeren Radialgeschwindigkeiten aufgeprägt, die zusätzliche Verluste bewirken würden.

Die Vorwärts-Rückwärts-Pfeilung hat auch strukturmechanische Vorteile, da die Zentren für Schubmittelpunkt, elastische Achse und Schwerpunkt im Vergleich zur reinen Vorwärts- oder Rückwärts-Pfeilung sich über die Schaufelblatthöhe h bis ungefähr 80% Schaufelhöhe überhaupt nicht und ab 80% Schaufelhöhe bis zur Schaufelspitze nur wenig ändern. Zusätzliche Biegemomente im Nabenbereich, wie sie bei reinen Vorwärts- oder Rückwärts-Pfeilungen entstehen, werden daher vermieden. Die im oberen Bereich des Schaufelblattes 2 geänderten Schwingungsmoden liegen nämlich oberhalb der zweiten Maschinenordnung, so daß sich mit der vorgeschlagenen Maßnahme auch in strukturdynamischer Hinsicht keine Einschränkung ergibt. Dabei können selbstverständlich eine Vielzahl von Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Schaufelfuß
- 2: Schaufelblatt
- 2a: Fußbereich von 2
- 2b: Spitzenbereich von 2
- 3: Strömungsrichtung
- 4a: Schaufel-Anströmkante
- 4b: Schaufel-Abströmkante
- 5: Gehäusekontur
- Rₐ: Außenradius von 2
- Rᵢ: Innenradius von 2
- W: Wendepunkt
- a': konventionelle Kontur von 4a in 2b
- b': konventionelle Kontur von 4b in 2b
- h: Schaufelblatthöhe
- α: Winkel zwischen 4a und 5

## Patentansprüche

1. Rotor-Schaufelblatt (2) einer Axialströmungsmaschine, insbesondere für einen Fan oder eine Verdichter-Hochdruckstufe einer Gasturbinenanlage, mit Maßnahmen im Spitzenbereich (2b) zur Verbesserung des Überschallverhaltens,
**gekennzeichnet durch** eine Vorwärts-Rückwärts-Pfeilung der Schaufelanströmkante (4a).

2. Rotor-Schaufelblatt nach Anspruch 1,
**dadurch gekennzeichnet, daß** der Spitzenbereich (2b) der Schaufelabströmkante (4b) im wesentlichen ähnlich dem der Schaufelanströmkante (4a) gestaltet ist.

3. Rotor-Schaufelblatt nach Anspruch 1 oder 2,
**dadurch gekennzeichnet, daß** sich der Spitzenbereich (2b) über die äußeren 15% bis 25% der Schaufelblatthöhe (h) erstreckt.

## Claims

1. Rotor blade airfoil (2) of an axial-flow engine, more particularly of a fan or a compressor high-pressure stage of a gas turbine system, having means in the tip region (2b) to improve supersonic performance,
**characterized by** a forward-back sweep of the blade afflux edge (4a)

2. Rotor blade airfoil in accordance with Claim 1,
**characterized in that** the tip region (2b) of the blade efflux edge (4b) is essentially designed similar to that of the blade afflux edge (4a).

3. Rotor blade airfoil in accordance with Claims 1 or 2,
**characterized in that** the tip region (2b) extends across the outer 15% to 25% of the blade span (h).

## Revendications

1. Pale de rotor (2) d'un moteur à écoulement axial, en particulier pour une soufflante ou un étage de compresseur haute pression d'une turbine à gaz, avec des mesures aux bouts (2b) des pales pour améliorer le comportement supersonique,
**caractérisée par** une cambrure avant-arrière du bord d'afflux de la pale (4a).

2. Pale de rotor selon la revendication 1,
**caractérisée en ce que** la zone de bout (2b) du bord d'efflux de la pale (4b) est pour l'essentiel formée de façon similaire au bord d'afflux de la pale (4a).

3. Pale de rotor selon la revendication 1 ou 2,
**caractérisée en ce que** la zone de bout (2b) s'étend sur les 15 % à 25 % extérieurs de la hauteur de la pale (h).
